# EUROPEAN PATENT APPLICATION

(11) **EP 1 600 716 A1**
(43) Date of publication of application: **30.11.2005**
(21) Application number: 04717848.8
(22) Date of filing: 05.03.2004
(51) Int. Cl.: F27B 9/24

(54) **CARRYING MECHANISM USING WIRE MATERIAL, HEAT TREATING FURNACE USING THE MECHANISM, AND HEAT TREATING METHOD**

(30) Priority: 06.03.2003 JP 2003059324; 09.09.2003 JP 2003317035
(71) Applicant: NGK INSULATORS, LTD., Nagoya-shi, Aichi 467-8530 (JP)
(72) Inventor: Aoki, Michiro, c/o Ngk Insulators, Ltd., Nagoya-shi, Aichi 4678530 (JP); Kondo, Yoshio, c/o Ngk Kilntec, Corporation, Nagoya-shi, Aichi 4678530 (JP); Itou, Toshio, c/o Ngk Insulators, Ltd., Nagoya-shi, Aichi 4678530 (JP)
(74) Representative: Leson, Thomas Johannes Alois
(86) International application number: PCT/JP2004/002830
(87) International publication number: WO 2004/079283

(57) **Abstract**

The present invention relates to a carrying mechanism usable for successively carrying a plurality of articles to be heated in a heat treating furnace for heat treating the articles. The carrying mechanism of the present invention has wire materials 5 provided to be moved relative to the heat treating furnace and carries the articles 10 by placing the articles 10 on the wire materials 5 and moving the wire materials 5.

## Description

### Technical Field

The present invention relates to a carrying mechanism for sequentially carrying articles to be heated, such as substrates of solar batteries, in a heat treating furnace, a heat treating furnace using the mechanism, a heat treating method, and a method for supporting in the furnace the articles to be heated in the state of being isolated from the interior shell of the furnace.

### Background Art

Hitherto, walking beams have been used as carrying mechanisms in furnace for heat treatment of metals, and recently they are used also for drying thin substrates such as plasma display panel substrates in furnace and furthermore it is now studied to use them for heat treatment of substrates of solar batteries.

The main reason for such increase of uses is that the walking beams are smaller in sensible heat capacity as compared with mesh belt conveyors generally used as carrying mechanisms in furnace in heat treating, for example, substrates of solar batteries, and, thus, sharp reduction of energy cost required for the heat treatment and rapid increase and decrease of temperature can be expected.

When a substrate in which a functional film material such as an electrode paste is formed also at the central part of the back side, such as a substrate of solar battery, is carried in a furnace by a walking beam, supporting pins are provided on the beam which contact with the substrate at only the portion near the outer periphery of the substrate so as not to interfere with the portion at which the functional filmmaterial is formed, and the substrate is supported on the beam by means of the supporting pins.

However, as mentioned above, in the case of a walking beam in which a substrate is supported by means of supporting pins on the beam at only the portion near the outer periphery of the substrate, when breakage occurs in the substrate owing to thermal shock or some vibration during carriage of the substrate, the broken substrate cannot be supported, and, hence, normal carriage cannot be performed and the substrate stays during the treating step and, besides, substrates which are successively carried thereafter are heaped up there to result in many rejected products. Moreover, whenever breakage of the substrate occurs, the step must be stopped to remove the rejected products, and thus working efficiency of the heat treating furnace deteriorates.

Furthermore, as mentioned above, the walking beam is smaller in sensible heat capacity as compared with mesh belt conveyors, but development of carrying mechanisms of further smaller heat capacity is demanded.

The present invention has been made under the above circumstances, and the object is to provide a carrying mechanism which is equal to or smaller than conventional walking beams in heat capacity and which is prevented from being adversely affected even when articles to be heated, such as substrates, are broken during being carried in a heat treating furnace, and can normally carry the remaining articles.

### Disclosure of Invention

According to the present invention, there is provided a carrying mechanism usable for carrying in succession a plurality of articles to be heated in a heat treating furnace for heat treating the articles, wherein the carrying mechanism has wire materials provided to be moved relative to the heat treating furnace and the articles are placed on the wire materials and the wire materials are moved to carry the articles (the first carrying mechanism).

Moreover, according to the present invention, there is provided a carrying mechanism usable for carrying in succession a plurality of plate-like articles to be heated in a heat treating furnace for heat treating the articles, wherein the carrying mechanism has two kinds of wire materials disposed at a given interval in such a manner that they perform different actions relative to the heat treating furnace or two kinds of wire materials disposed at a given interval in such a manner that one kind of them are fixed to the heat treating furnace and another are moved relative to the heat treating furnace, said two kinds of wire materials are disposed in such a manner that a plurality of them are disposed in parallel on left and right sides of the center line of the carrying path, respectively, and a plurality of supporters supporting the articles in contact with only the edge part of the articles are attached to each of two kinds of the wire materials at intervals in carrying direction (the second carrying mechanism).

Furthermore, according to the present invention, there is provided a heat treating furnace provided with the above first or second carrying mechanism.

Further, according to the present invention, there is provided a heat treating method which carries out heat treatment of the articles to be heated while carrying the articles using the above first or second carrying mechanism in a heat treating furnace.

Moreover, according to the present invention, there is provided a method for supporting articles to be heated in a furnace which comprises supporting the articles on wire materials stretched in a heat treating furnace for heat treating the articles to isolate the articles from the interior shell of the furnace.

The carrying mechanism of the present invention is preferably provided with a vibration inhibiting member which works synchronously with the wire materials while keeping the state of lightly contacting with the wire materials moving relative to the heat treating furnace. Moreover, the carrying mechanism of the present invention is particularly useful when the articles to be heated are substrates having a functional film material formed thereon, and especially when they are substrates of solar batteries and the like having a functional film material such as an electrode paste also at the central part on the back side of the substrate.

### Brief Description of Drawings

Fig. 1 is an explanatory view which schematically shows one example of embodiments of the first carrying mechanism of the present invention.
Fig. 2 is an explanatory view which schematically shows another example of embodiments of the first carrying mechanism of the present invention.
Fig. 3 is an explanatory view which shows a method of providing the vibration inhibiting member.
Fig. 4 is an explanatory view which shows the state of contact between wire materials and the vibration inhibiting member.
Fig. 5 is an explanatory view which shows one example of a method of placing the substrates.
Fig. 6 is an explanatory view which shows another example a method of placing the substrates.
Fig. 7 is an explanatory view which schematically shows one example of embodiments of the second carrying mechanism of the present invention.
Fig. 8(a) is a plan view of a supporter attached to the fixed wire materials.
Fig. 8(b) is a side view of a supporter attached to the fixed wire materials.
Fig. 9(a) is a plan view of a supporter attached to the moving wire materials.
Fig. 9(b) is a side view of a supporter attached to the moving wire materials.
Fig. 10 is a side view seeing from the carrying direction which shows the state of the article to be heated being supported by the supporters attached to the fixed wire material.
Fig. 11 is a side view seeing from the carrying direction which shows the state of the article to be heated being supported by the supporters attached to the moving wire material.
Figs. 12(a)-(e) are explanatory view which show one example of carrying action when two kinds of wire materials are constructed so that they perform different actions from each other relative to the heat treating furnace in the second carrying mechanism.
Fig. 13 is an explanatory view which shows the state when the supporter attached to the wire materials disposed on the right side of the center line of the carrying path and the supporter attached to the wire materials disposed on the left side are deviated from each other in their positions in the carrying direction.

### Best Mode for Carrying Out the Invention

The carrying mechanism of the present invention will be specifically explained by the embodiments. The first carrying mechanism of the present invention is usable for successively carrying, for example, a plurality of nearly tetragonal substrates having a functional film material formed on a base in a heat treating furnace which carries out heat treatment of the articles such as substrates of solar batteries. The first carrying mechanism of the present invention has been contrived on the basis of the conception that wire materials such as wires and chains are used in place of beams in the conventional walking beams, and is characterized in that it has wire materials provided to be moved relative to the heat treating furnace, and the articles to be heated are placed on the wire materials and carried by moving the wire materials.

As a specific construction, it may comprise two kinds of wire materials disposed at a given interval so that they perform walking beam actions different from each other relative to the heat treating furnace as in the case of so-called double walking beams or two kinds of wire materials disposed at a given interval, one of which are fixed wire materials fixed to the heat treating furnace and another of which are moving wire materials performing a walking beam action relative to the heat treating furnace as in the case of general walking beams. Furthermore, the wire materials and beams may be provided in combination, and, for example, the carrying mechanism may comprise beams fixed to the heat treating furnace and having supporting pins of a given height and wire materials provided to be moved relative to the heat treating furnace. The numbers of these wire materials and beams are respectively two or more, preferably three or less. In the present invention, the "walking beam action" means the action of conventionally known walking beam, namely, the moving action which periodically repeats the actions of rising → advancing → falling → backing.

The two kinds of wire materials or the wire materials and the beams contact with an article to be heated at the portion in the vicinity of outer periphery of the article, and the article having no breakage is supported on the two kinds of the wire materials or the wire materials and the beams.

The article having breakage readily drops on the hearth of the heat treating furnace through the space between the two kinds of the wire materials or the wire materials and the beams. In the case of the first carrying mechanism of the present invention where the wire materials are used, even if breakage occurs in the article during carrying, the broken article is freely dropped on the hearth, whereby the remaining articles can be normally carried and thus carrying of the articles can be continued.

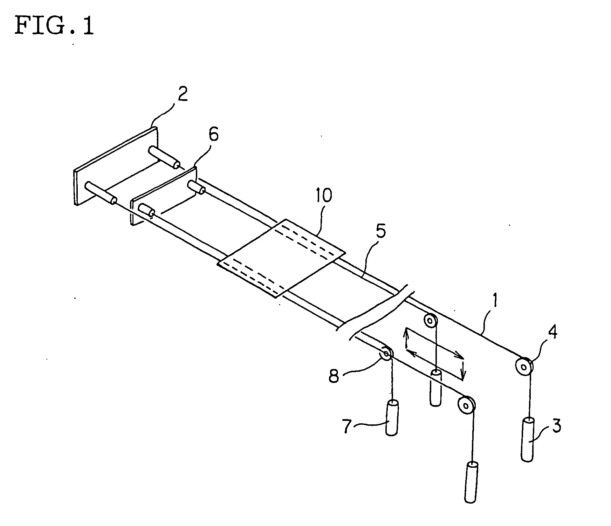

Fig. 1 is an explanatory view which schematically shows one example of the embodiments of the first carrying mechanism of the present invention. One end of a fixed wire material 1 which is fixed to the furnace and does not move is fixed to a fixed wire material holder 2, and another end is fixed to a fixing side weight 3. Since the fixing side weight 3 is fixed to the fixed wire material 1 through a fixing side pulley 4, the same tension can always be applied to the fixed wire material 1 irrespective of extension of the fixed wire material 1.

Similarly, one end of a moving wire material 5 moving relative to the furnace is fixed to a moving wire material holder 6, and another end is fixed to a moving side weight 7. Since the moving side weight 7 is fixed to the moving wire material 5 through a moving side pulley 8, the same tension can always be applied to the moving wire material 5 irrespective of extension of the moving wire material 5. Fig. 1 shows an embodiment where the article to be heated is a substrate of solar battery, and when width of the substrate is 15 cm, the two fixed wire materials 1 are disposed in parallel at an interval of 13-14 cm, and the moving wire materials 5 are disposed in parallel at an interval of 12-13 cm.

The moving wire material holder 6 and the moving side pulleys 8 are supported by a driving mechanism (not shown). The driving mechanism can have the same construction as one which performs the action of so-called general walking beam which repeats periodically the actions of rising, advancing, falling, and backing. Therefore, the moving wire material 5 can similarly periodically repeat the above actions.

In this carrying mechanism, the substrate 10 first placed on the fixed wire materials 1 is then placed on the moving wire materials 5 when the moving wire materials 5 rise. Then, the moving wire materials 5 advance to carry forward the substrate 10. Furthermore, when the moving wire materials 5 fall, the substrate 10 is then placed on the fixed wire materials 1. Finally, the moving wire materials 5 back, returning to the initial state. By repeating these actions, the substrate 10 can be carried, and can be subjected to a given heat treatment while passing through the heat treating furnace (not shown). In case the furnace temperature is relatively high, the fixed wire materials 1 and the moving wire materials 5 are disposed in the furnace and other constituting elements are provided in the vicinity of inlet part and outlet part outside the furnace. Of course, the other constituting elements may be provided in the furnace, taking into consideration the heat resistance.

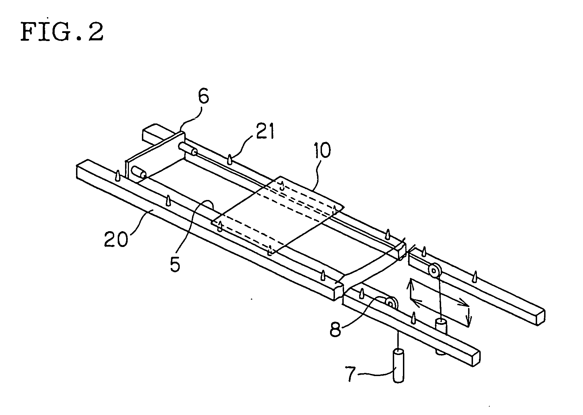

Fig. 2 shows an embodiment where beams 20 are used in place of the fixed wire materials 1 in Fig. 1. Both ends of the beams 20 are fixed to the furnace. On the upper face of the beams 20 are provided supporting pins 21 (pin-shaped supporter) of a given height, and while the moving wire materials 5 fall and back, the substrate 10 is in the state of being supported on the beams 20 by the supporting pins 21. In this way, when the substrate 10 is supported on the beams in such a state as being in contact with only the supporting pins 21, thermal influence given to the substrate 10 by the beams 20 can be reduced as much as possible. The constituents other than the beams in this embodiment are the same as in the embodiment shown in Fig. 1.

In the case of using wire materials for supporting and carrying the articles to be heated as in the carrying mechanism of the present invention, when the distance between supports of the wire materials (e.g., the distance between the moving wire material holder 6 and the moving side pulley 8 in the moving wire material 5 in Fig. 1) is long, the wire material is apt to vibrate and the vibration may cause dropping of the article, which may cause shifting of the placing position or breakage of the article.

Thus, in order to inhibit generation of vibration of the wire materials, it is preferred to provide a vibration inhibiting member which always lightly contacts with each wire material and inhibits generation of vibration of the wire materials and, upon generation of vibration, can immediately damp the vibration.

Such a vibration inhibiting member can be easily provided by fixedly fitting to the inner wall of the furnace for the wire material fixed to the heat treating furnace like the fixed wire material 1 shown in Fig. 1, while for the wire material moved relative to the heat treating furnace such as the moving wire materials 5 in Fig. 1 or wire materials used in the double walking beam system, there is needed a vibration inhibiting member which acts synchronously with the wire materials with maintaining the state of lightly contacting with the wire materials in order to obtain always constant contacting state.

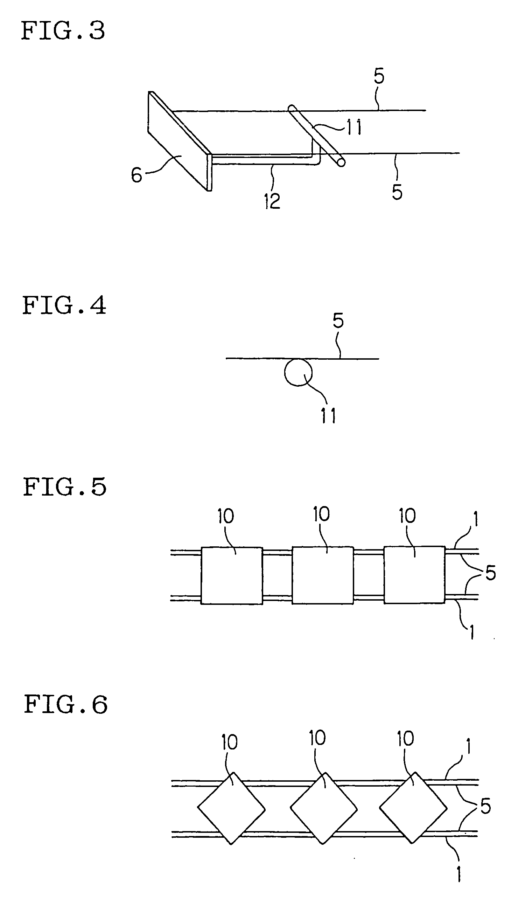

As a specific method for allowing the vibration inhibiting member to act synchronously with the wire materials, there is a method of attaching the vibration inhibiting member 11 to a part of the moving wire material holder 6 by means of a linking member 12 as shown in Fig. 3. In this way, the moving wire materials 5 and the vibration inhibiting member 11 always synchronously act with each other without changing the relative positional relation of them even during movement of the wire materials.

In order to early diminish the vibration of the wire materials, it is desired that the wire materials 5 and the vibration inhibiting member 11 are in the state of delicate contact with each other, namely, in the state of light touching to each other as shown in Fig. 4, and the vibration inhibiting member 11 is preferably in the form of a column which can readily give the above contact state. The contact position of the wire materials 5 and the vibration inhibiting member is preferably such a position as generating no resonance. In order to easily adjust the contact position of the wire materials and the vibration inhibiting member, it is preferred to use a linking member changeable in length as the linking member 12 which links the moving wire material holder 6 and the vibration inhibiting member 11.

An advantage of the carrying mechanism of the present invention over the conventional carrying mechanism in furnace is that no cooling spots are produced between the wire materials and the substrate in case the article to be carried is a substrate having a functional film material formed on the base such as a substrate of solar battery. In the conventional carrying mechanisms such as mesh belt conveyors, since the heat capacity of the mesh belt is large, the mesh belt is hardly heated even during rising of temperature, resulting in cooling spots at the contact portion of the mesh belt and the substrate. Therefore, it is necessary to allow the mesh belt to contact with the substrate at only the portion in the vicinity of outer periphery where no functional film material is formed, which limits the manner of placing of the substrates.

On the other hand, in the carrying mechanism of the present invention, there is no problem of producing the cooling spots in the contact portion of the wire materials and the substrate since the carrying mechanism is always in the furnace and, besides, the substrate is carried using wire materials which are small in heat capacity and easily heated during rising of temperature. Therefore, the degree of freedom in the manner of placing the substrate is high, and the nearly tetragonal substrate 10 may be placed in such a manner that the lengthwise direction of the fixed wire materials 1 and the moving wire materials 5 is nearly in parallel with the opposing two sides of the substrate 10 as shown in Fig. 5 or the nearly tetragonal substrate 10 may be placed in such a manner that the lengthwise direction of the fixed wire materials 1 and the moving wire materials 5 is nearly in parallel with one of diagonal lines of the substrate 10 as shown in Fig. 6.

When the manner of placement as shown in Fig. 6 is employed, and, for example, the nearly tetragonal substrate 10 is carried by the fixed wire materials 1 and moving wire materials 5 which consist of two wire materials, respectively, even if the length of one side of the substrate 10 is shorter than the interval between the two fixed wire materials and the interval between the two moving wire materials, the substrate can be carried if the length of the diagonal line is longer than the intervals of the wire materials.

Therefore, when the manner of placement as shown in Fig. 5 and the manner of placement as shown in Fig. 6 are employed in combination, substrates differing in size within a certain range can be carried with the same interval between the wire materials without changing the interval.

Next, the second carrying mechanism of the present invention will be explained.

As aforementioned, the second carrying mechanism of the present invention is a carrying mechanism usable for successively carrying a plurality of plate-like articles to be heated in a heat treating furnace for heat treating the articles, and its characteristic construction is that the carrying mechanism has two kinds of wire materials disposed at a given interval in such a manner that they perform different actions relative to the heat treating furnace or two kinds of wire materials disposed at a given interval in such a manner that one of them is fixed to the heat treating furnace and another is moved relative to the heat treating furnace, said two kinds of wire materials are disposed in such a manner that a plurality of them are disposed in parallel on left and right sides of the center line of the carrying path, respectively, and a plurality of supporters supporting the articles in contact with only the edge part of the articles are attached to each of two kinds of the wire materials at intervals in carrying direction.

The second carrying mechanism of the present invention has been contrived on the basis of the conception that wire materials such as wires and chains stretched by applying a tension to such a degree as capable of supporting the articles to be heated are used in place of beams (columnar members) in the conventional walking beams, and it may comprise two kinds of wire materials disposed at a given interval so that they perform walking beam actions different from each other relative to the heat treating furnace as in the case of so-called double walking beams or two kinds of wire materials disposed at a given interval, one of which are fixed wire materials fixed to the heat treating furnace and another of which are moving wire materials moving relative to the heat treating furnace as in the case of general walking beams.

The supporters attached to each of the two kinds of the wire materials contact with only the edge portion of the articles, and the articles having no breakage are supported on the supporters.

The article where breakage has occurred readily drops on the hearth of the heat treating furnace. In the second carrying mechanism of the present invention, when breakage occurs in the article during carrying, the broken article is also freely dropped on the hearth by using the wire material as the carrying mechanism, whereby the remaining articles can be normally carried and thus carrying of the articles can be continued.

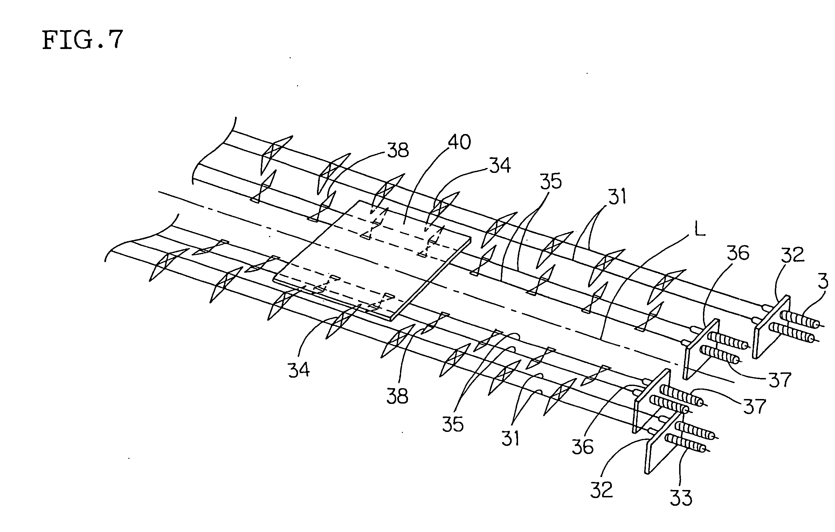

Fig. 7 is an explanatory view which schematically shows one example of embodiments of the second carrying mechanism of the present invention. The ends of the fixed wire materials 31 which are fixed to the furnace and do not move are fixed to the fixed wire material holder 32. Since the ends of the fixed wire materials 31 are fixed to the fixed wire material holder 32 by means of helical springs 33, the same tension is always applied to the fixed wire materials 31. Similarly, the ends of the moving wire materials 35 which move relative to the furnace are fixed to a moving wire material holder 36. Since the ends of the moving wire materials 35 are also fixed to the moving wire material holder 36 by means of helical springs 37, the same tension is always applied to the moving wire materials 35. In Fig. 7, another ends of the fixed wire materials 31 and the moving wire materials 35 are omitted, but the omitted ends are also similarly fixed to the fixed wire material holder 32 or the moving wire material holder 36.

Two of the fixed wire materials 31 and two of the moving wire materials 35 are disposed in parallel on the left and right sides of the centerline L in the carrying path of article 40, respectively, and a plurality of supporters 34 and 38 supporting the article 40 in contact with only the edge portion of the article 40 are attached to each of these two kinds of wire materials 31 and 35 at intervals in carrying direction.

The number of the two kinds of the wire materials 31 and 35 disposed on both the left and right sides of the centerline L in the carrying path is two or more (two in the example of Fig. 7) in view of the stability of the supporters attached to the wire materials. In case the supporters 34 and 38 are laid across the two wire materials as shown in Fig. 7, when the article 40 is placed, the position of the article does not readily change due to its weight and the article can be stably supported. In order to further improve the stability, the number of each of the two kinds of the wire materials 31 and 35 disposed on both the left and right sides of the centerline L in the carrying path may be three or more, but if the number of the wire materials is too many, heat capacity of the wire materials increases, although attaching stability of the supporters 34 and 38 is improved, and hence use of two wire materials is preferred.

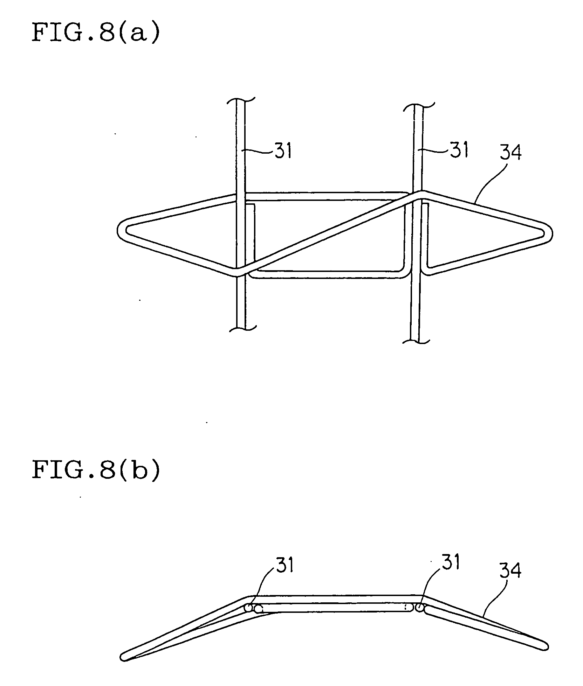

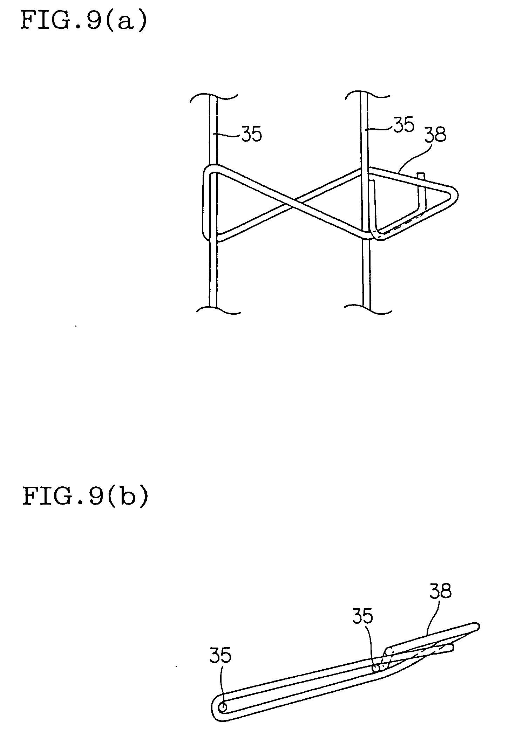

Fig. 8(a) and Fig. 8(b) are plan view and side view of the supporter 34 attached to the fixed wire materials 31. Fig. 9 (a) and Fig. 9 (b) are plan view and side view of the supporter 38 attached to the moving wire materials 35. As shown in these figures, the supporters 34 and 38 used in the second carrying mechanism of the present invention are preferably those which are attached to the wire materials 31 and 35 in such a manner as nipping, by a part of the structure of the supporters, a plurality of the wire materials 31 and 35 disposed on both the left and right sides of the centerline L in the carrying path. The supporters of such construction can be easily attached to the wire materials and, besides, the position of the supporters can be shifted in carrying direction after being attached and thus the intervals between the supporters can be easily adjusted.

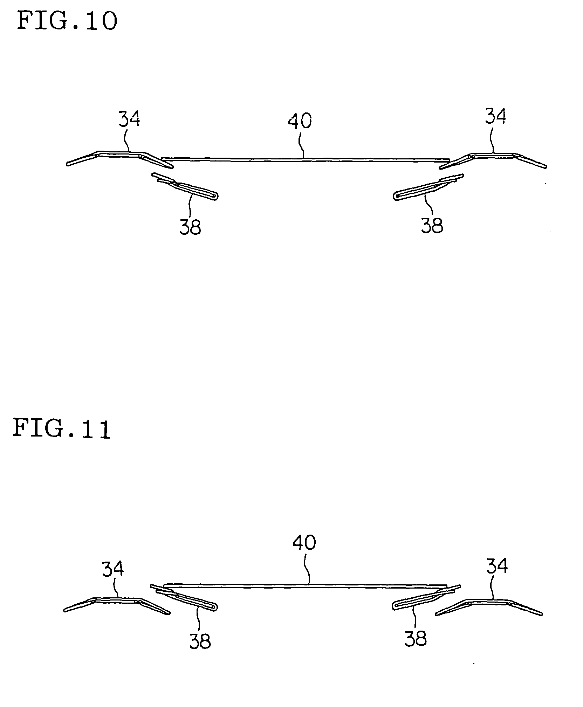

Fig. 10 is a side view showing the state of the article 40 being supported by the supporters 34 attached to the fixed wire materials, which is viewed from the carrying direction, and Fig. 11 is a side view showing the state of the article 40 being supported by the supporters 38 attached to the moving wire materials, which is viewed from the carrying direction. As shown in these figures, the supporters 34 and 38 used in the second carrying mechanism of the present invention are preferably those which have inclining portions declining toward the center line of the carrying path in the state of being attached to the wire materials and support the article 40 by the inclining portions in contact with only the edge portion of the article 40. By providing the inclining portions as above, the supporters 34 and 38 can support the article 40 in contact with only the edge portion of the article 40 without contacting with back side or the like of the article 40.

In carrying out the heat treatment in a high temperature area exceeding 600°C in furnace temperature, if the article is directly placed on the wire materials or the article is supported by supporting pins provided on the beams as in the embodiment relating to the above-mentioned first carrying mechanism, the component of the article may deposit in the portion of contacting of the back side of the article with the supporting pins or burning marks may remain on the back side of the article to give adverse effect on the performance or appearance of the article. In case supporters which support the article in contact with only the edge portion of the article are attached to the wire materials, the article can be carried by supporting the article while the back side of the article does not contact with anything, and hence the above-mentioned adverse effect can be avoided.

The moving wire holder 36 to which the ends of the moving wire materials 35 are fixed is supported by a driving mechanism (not shown). The driving mechanism can have the same construction as one which performs actions of so-called general walking beams which periodically repeat the actions of rising, advancing, falling, backing at a constant stroke. Therefore, the moving wire materials 35 can similarly repeat periodically the above walking beam actions.

In this carrying mechanism, the article 40 to be heated which is firstly placed on the supporters 34 attached to the fixed wire materials 31 is then placed on the supporters 38 attached to the moving wire materials 35 at the time of rising of the moving wire materials 35. Then, the moving wire materials 35 advance to allow the article 40 to move forward. Subsequently, when the moving wire materials 35 fall, the article 40 is then placed on the supporters 34 attached to the fixed wire materials 31. Finally, the moving wire materials 35 back to return to the original state. By repeating these actions, the article 40 can be carried and can be subjected to a given heat treatment while passing through the heat treating furnace (not shown).

In this example, only one kind of the two kinds of wire materials (moving wire materials 35) move (action of walking beams) relative to the heat treating furnace, but the two kinds of wire materials disposed at a given interval may be allowed to act in different ways relative to the heat treating furnace like so-called double walking beams.

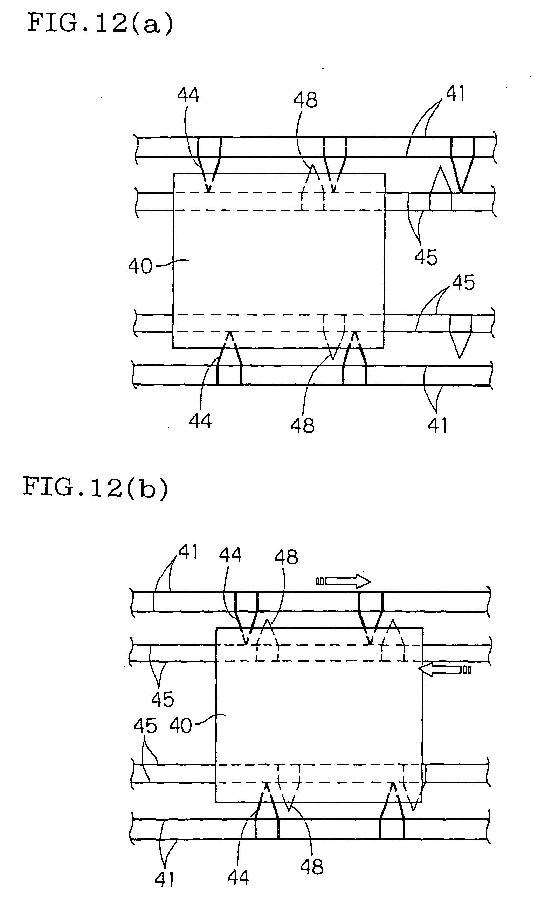

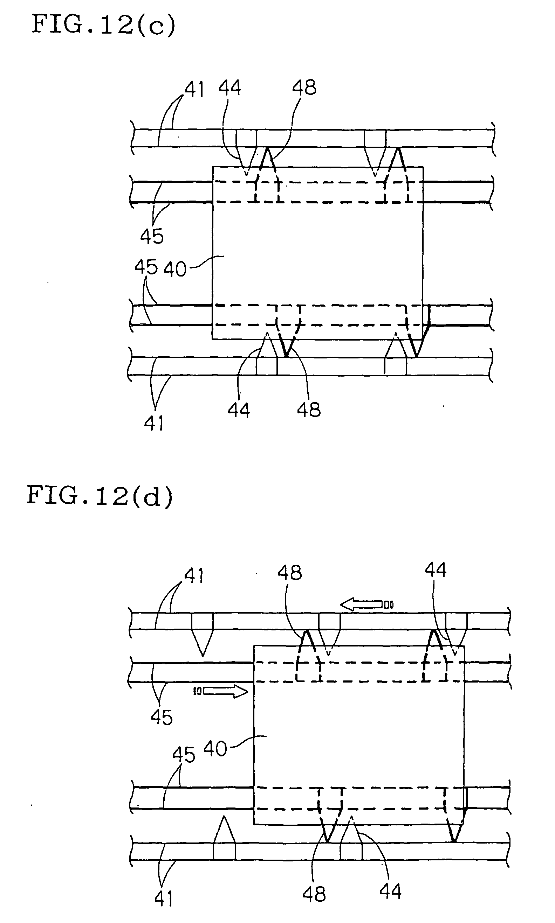

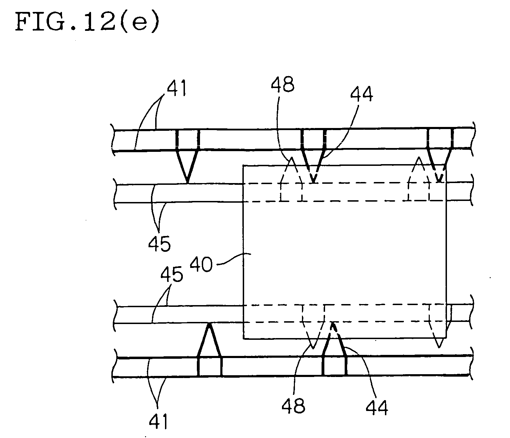

Fig. 12 (a) - Fig. 12(e) are explanatory views showing one example of the carrying mechanism in which two kinds of wire materials are allowed to act in different ways relative to the heat treating furnace. In these figures, the wire materials and the supporters shown by thick lines are present above the wire materials and the supporters shown by fine lines and support the article 40. In the figures, the wire materials disposed inside are the first moving wire materials 45 which periodically repeat the actions of rising, advancing, falling and backing at a given stroke like the moving wire materials 35 shown in Fig. 7, and the wire materials disposed outside are the second moving wire materials 41 which periodically repeat the actions of advancing and backing at a given stroke.

In this carrying mechanism, firstly, the first moving wire materials 45 are in the state of fallen, and the article 40 is supported by the supporters 44 attached to the second moving wire materials 41 as shown in Fig. 12(a). Then, the second moving wire materials 41 advance at a given stroke, and the first moving wire materials 45 remaining as they have fallen back at a given stroke as shown in Fig. 12(b). Subsequently, the first moving wire materials 45 rise at a given stroke, and in this case the article 40 is placed on the supporters 48 attached to the first moving wire materials 45 as shown in Fig. 12 (c) . Then, the first moving wire materials 45 remaining as they have risen advance at a given stroke, and the second moving wire materials 41 back at a given stroke as shown in Fig. 12 (d) . Finally, as shown in Fig. 12 (e), the first moving wire materials 45 fall, and in this case, the article 40 is placed on the supporters 44 attached to the second moving wire materials 41. Thus, the respective wire materials return to the initial position. By repeating these actions, the article 40 can be carried and can be subj ected to the desired heat treatment while passing through the heat treating furnace (not shown).

When the two kinds of wire materials are allowed to act in different ways relative to the heat treating furnace and the respective wire materials are allowed to act little by little as mentioned above, the time during which the article stops can be shortened as compared with the case where only one kind of the wire materials are moved, and in spite of an intermittent carrying form like the walking beam, there is obtained a carrying action similar to the continuous carrying form like the belt conveyor.

In the second carrying mechanism of the present invention, positions of the supporters attached, intervals of the supporters attached, intervals of both the wire materials disposed, range of action, etc. are set so that the supporters attached to one kind of the two kinds of the wire materials and the supporters attached to another wire materials do not interfere with each other during operation of the carrying mechanism.

The intervals of the supporters attached (attaching pitch) are preferably such that each article to be heated on the carrying mechanism can be always supported by three or more supporters. In case the supporters which support each article are two or less, the article can hardly be stably supported, and for always stably supporting the article during operation of the carrying mechanism, it is necessary to support the article by at least three supporters (three point supporting). However, if the number of the supporters supporting the article to be heated is increased too much by narrowing the intervals between the supporters attached, the stability of supporting is improved, but there is a demerit that weight applied to the wire materials or heat capacity of the carrying mechanism increases. Therefore, it is ideal to support the article by three supporters which are the minimum number which can give stable support as mentioned above.

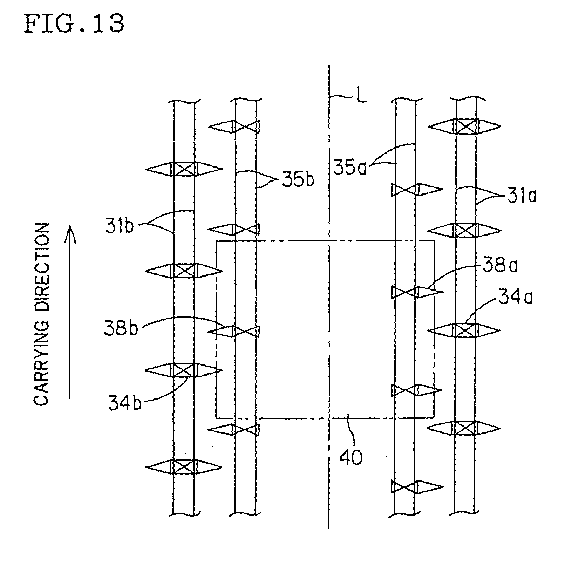

As positional relationship of the supporters attached to the same kind of wire materials, it is preferred as shown in Fig. 13 that the supporters 34a attached to the wire materials 31a disposed on the right side of the center line L in the carrying path and the supporters 34b attached to the wire materials 31b disposed on the left side of the center line L in the carrying path are not opposite to each other in the direction perpendicular to the carrying direction of the article. Similarly, it is preferred that the supporters 38a attached to the wire materials 35a disposed on the right side of the center line L in the carrying path and the supporters 38b attached to the wire materials 35b disposed on the left side of the center line L in the carrying path are not opposite to each other in the direction perpendicular to the carrying direction of the article. In this way, as to the positional relation of the supporters attached to the same kind of the wire materials, by shifting the positions of attachment of the supporters in such a manner that the supporters on the right side and on the left side of the center line L are not present at opposite positions, supporting of the article by three supporters can be ensured even if the intervals between the supporters are relatively wide, and thus it becomes possible to reduce the number of necessary supporters and to further diminish the heat capacity. Moreover, if the intervals of the supporters attached can be made sufficiently wider than the moving stroke of the wire materials in back and forth direction, the supporters attached to one of two kinds of wire materials and the supporters attached to another wire materials can have such a positional relation as not crossing each other during operation of the carrying mechanism, and thus the supporters can be easily inhibited from physical interference with each other.

As a specific example of design size, when the length of the article to be heated in the carrying direction is X, the interval K between the supporters attached to each of the two kinds of wire materials is less than 2/3 of X. When the closest interval between the supporters which are attached to the two kinds of the wire materials, respectively in the carrying direction is S, the distance D of the article being moved by the respective wire materials at one stroke in the carrying direction satisfies the relation D = (K/2) - S. When the two kinds of the wire materials act once (1 cycle), the article moves by 2 strokes. Therefore, in the case of the moving speed of the article to be heated being Y, the acting time T required for the two kinds of the wire materials acting once (1 cycle) satisfies the relation T = 2 × D/Y. Since the acting time T cannot be made excessively shorter though it depends on size or weight of the article, if the moving speed Y of the heated article is to be higher, the above distance D must be longer.

It has been confirmed that the article can be stably carried without causing interference of the supporters with each other as a result of carrying out test by the present inventors wherein a square substrate of solar battery having one side of 150 mm as an article to be heated has been carried with setting the size of each portion as follows:
X = 150 (mm)
K = 90 (mm)
S = 15 (mm)
D = 30 (mm)
Y = 15 (mm/sec), and
T = 4 (sec).

The constituent material and shape of the wire materials used in the present invention are not particularly limited so long as they have heat resistance capable of standing the temperature in the furnace and can be subjected to necessary tension, and the wire materials include, for example, twisted wire materials of a metal such as Inconel, titanium or the like, wires comprising fine rod of 1-2 mm in diameter, chains comprising a metal or ceramics excellent in heat resistance, and the like. In the first carrying mechanism, the surface of the wire materials may be provided with projections or short rods at given intervals in order to reduce the area contacting with the article.

The heat treating furnace in the present invention is provided with the first or second carrying mechanism of the present invention as a carrying mechanism for the articles to be heated in the furnace, and by carrying out the heat treatment of the articles using the heat treating furnace, the effects obtained by the first or second carrying mechanism of the present invention can be exerted in actual heat treatment. Furthermore, the heat treating method of the present invention carries out heat treatment of the articles to be heated while carrying the articles using the first or second carrying mechanism of the present invention in the heat treating furnace, and by carrying out the heat treatment of the articles by this heat treating method, the effects obtained by the first or second carrying mechanism of the present invention can similarly be exerted in actual heat treatment. In the heat treating furnace and heat treating method of the present invention, preferably a far infrared heater or near infrared heater is used as a heating means for heat treating the articles to be heated.

According to the method of supporting the articles in the furnace, the articles to be heated are isolated from the interior shell of the furnace by supporting the articles on the wire materials stretched in the furnace. In heat treating the articles in the heat treating furnace, the articles to be heated must be supported in the state of being isolated from the interior shell of the furnace so that the articles do not contact with the interior shell of the furnace, and from the viewpoint of a method of supporting for isolating the articles from the interior shell of the furnace, for example, a mesh belt cannot be said to be a preferable supporting material because it is large in heat capacity and great in area contacting with the articles.

According to the method of supporting the articles in the furnace, wire materials which are smaller in heat capacity and smaller in area contacting with the articles are used as supporting materials, and the articles are supported on the wire materials, thereby isolating the articles from the interior shell of the furnace, and as a result, the energy required for heating of the articles can be reduced and, besides, thermal effect exerted by the supporting material on the articles to be heated can be diminished. In this method of supporting the articles in the furnace, the wire materials may move in the state of supporting the articles as in the above-mentioned carrying mechanism or may merely support the articles in the state of being isolated from the interior shell of the furnace without moving.

### Industrial Applicability

The present invention can be suitably used in a heat treating furnace as a carrying mechanism for sequentially carrying articles to be heated such as substrates of solar batteries on which a functional film material is formed, a heat treating furnace using the mechanism, a heat treating method, and a method for supporting the articles in the furnace.

According to the first and second carrying mechanisms of the present invention, even if breakage occurs in the article, such as substrates, during carrying in the heat treating furnace, the broken article can readily be freely dropped, and the remaining articles can be normally carried. Therefore, it does not occur that the article broken during being carried hinders the movement of other substrates which are successively carried thereafter to cause heaping up of the substrates, resulting in many rejected products. Moreover, it is not necessary to once stop the operation of the carrying mechanism to remove the broken article, and therefore the working efficiency of the heat treating furnace can be improved. Moreover, since the carrying mechanism of the present invention carries the article to be heated by using wire materials such as wires, heat capacity is very small and energy cost can be diminished, and, in addition, rapid heating and cooling of the articles are possible and heat treatment of the articles can be performed with an ideal heat pattern. According to the second carrying mechanism of the present invention, the articles to be heated are supported by supporters in contact with only the edge portion of the articles, and hence there are no adverse effects caused by contact with wire materials or supporters on the back side of the articles.

The heat treating furnace of the present invention is provided with the carrying mechanism of the present invention as a carrying mechanism of the articles to be heated in the furnace, and, therefore, by carrying out the heat treatment of the articles using the heat treating furnace, the effect obtained by the carrying mechanism of the present invention can be exerted in actual heat treatment. Furthermore, since the heat treating method of the present invention carries out heat treatment of the articles while carrying the articles using the carrying mechanism of the present invention in the heat treating furnace, similarly by carrying out the heat treatment of the articles using the heat treating method, the effect obtained by the carrying mechanism of the present invention can be exerted in actual heat treatment.

According to the supporting method in the furnace of the present invention, since wire materials which are small in heat capacity and small in contact area with the article to be heated are used as supporting materials and the articles are supported on the wire materials, thereby isolating the articles to be heated from the interior shell of the furnace, and as a result, energy required for heating of the articles can be diminished and the thermal effect given by the supporting materials to the articles can be reduced.

## Claims

1. A carrying mechanism usable for successively carrying a plurality of articles to be heated in a heat treating furnace for heat treating the articles, wherein the carrying mechanism has wire materials provided to be moved relative to the heat treating furnace, the articles to be heated are placed on the wire materials, and the wire materials are moved to carry the articles.

2. A carrying mechanism according to claim 1 which has at least two wire materials of each of two kinds of wire materials disposed at a given interval in such a manner that they perform different walking beam actions relative to the heat treating furnace or at least two wire materials of each of two kinds of wire materials disposed at a given interval in such a manner that one kind of them are fixed to the heat treating furnace and another kind of them perform a walking beam action.

3. A carrying mechanism according to claim 1 which has at least two beams fixed to the heat treating furnace and provided with supporting pins of a given height on the upper surface of the beams and at least two wire materials provided to be moved relative to the treating furnace.

4. A carrying mechanism according to claim 1 which is provided with a vibration inhibiting member which works synchronously with the wire materials while keeping the state of lightly contacting with the wire materials moving relative to the heat treating furnace.

5. A carrying mechanism according to any one of claims 1-4, wherein the articles to be heated are substrates on which a functional film material is formed.

6. A carrying mechanism according to claim 5, wherein the substrates are those of solar batteries.

7. A heat treating furnace provided with the carrying mechanism of any one of claims 1-6.

8. A heat treating furnace according to claim 7 which is provided with a far infrared heater or a near infrared heater as a heating means for heat treating the articles to be heated.

9. A heat treating method which carries out heat treatment of the articles to be heated while carrying the articles using the carrying mechanism of any one of claims 1-6 in the heat treating furnace.

10. A heat treating method according to claim 9, wherein a far infrared heater or a near infrared heater is used as a heating means for heat treating the articles to be heated.

11. A carrying mechanism usable for successively carrying a plurality of plate-like articles to be heated in a heat treating furnace for heat treating the articles which has two kinds of wire materials disposed at a given interval in such a manner that they perform different actions relative to the heat treating furnace or two kinds of wire materials disposed at a given interval in such a manner that one kind of them are fixed to the heat treating furnace and another kind of them are moved relative to the heat treating furnace, said two kinds of wire materials being disposed in such a manner that a plurality of them are disposed in parallel on left and right sides of the center line of the carrying path, respectively, and a plurality of supporters supporting the articles in contact with only the edge part of the articles being attached to each of the two kinds of the wire materials at intervals in carrying direction.

12. A carrying mechanism according to claim 11, wherein the supporters are attached to the wire materials in such a manner as nipping a plurality of the wire materials disposed in parallel on both the left and right sides of the centerline in the carrying path by a part of the structure of the supporters.

13. A carrying mechanism according to claim 11 or 12, wherein the supporters have inclining portions declining toward the center line of the carrying path in the state of being attached to the wire materials and support the articles to be heated by the inclining portions in contact with only the edge portion of the articles.

14. A carrying mechanism according to any one of claims 11-13, wherein one of the two kinds of the wire materials periodically repeat the actions of rising, advancing, falling and backing at a given stroke and another wire materials periodically repeat the actions of advancing and backing at a given stroke.

15. A carrying mechanism according to any one of claims 11-14, wherein as a positional relation of the supporters attached to the same kind of the wire materials, the supporters attached to the wire materials disposed on the right side of the center line in the carrying path and the supporters attached to the wire materials disposed on the left side of the center line in the carrying path are not present at opposing positions in the direction perpendicular to the carrying direction of the articles to be heated.

16. A carrying mechanism according to any one of claims 11-15, wherein the articles to be heated are substrates on which a functional film material is formed.

17. A carrying mechanism according to claim 16, wherein the substrates are those of solar batteries.

18. A heat treating furnace provided with the carrying mechanism of any one of claims 11-17.

19. A heat treating furnace according to claim 18 which is provided with a far infrared heater or a near infrared heater as a heating means for heat treating the articles to be heated.

20. A heat treating method which carries out heat treatment of the articles to be heated while carrying the articles using the carrying mechanism of any one of claims 11-17 in the heat treating furnace.

21. A heat treating method according to claim 20, wherein a far infrared heater or a near infrared heater is used as a heating means for heat treating the articles to be heated.

22. A method of supporting articles to be heated in a heat treating furnace for heat treatment of the articles which comprises supporting the articles on wire materials stretched in the furnace to isolate the articles from interior shell of the furnace.
